# EUROPÄISCHE PATENTANMELDUNG

(11) **EP 0 756 410 A2**
(43) Veröffentlichungstag der Anmeldung: **29.01.1997**
(21) Anmeldenummer: 96111550.8
(22) Anmeldetag: 17.07.1996
(51) Int. Cl.: H04M 3/42, H04Q 3/00, H04M 3/38

(54) **Verfahren zur Authentisierung von Fernsprechdienste-Benutzern**

(30) Priorität: 24.07.1995 DE 19527022
(71) Anmelder: SIEMENS AKTIENGESELLSCHAFT, 80333 München (DE)
(72) Erfinder: Lueder, Reinhard, Dipl.-Ing., 83607 Holzkirchen (DE); Kramer, Harald, Dipl.-Inform., 82152 Krailling (DE)

(57) **Zusammenfassung**

Zur Authentisierung von Dienste-Benutzern, insbesondere zur Authentisierung von Benutzern eines Sprach-Mehrwertdienst "Virtual Card Calling" [VCC], wird für jeden Dienste-Benutzer eine benutzerindividuell festgelegte Informationsmenge, bestehend aus einer Abfragemenge und einer Menge von zugehörigen Antworten, gespeichert; es wird (werden) aus der Abfragemenge zufallsgesteuert eine oder mehrere Abfrage(n) ausgewählt und dem Benutzer zu dessen Eingabe der jeweils zugehörigen Antwort übermittelt, und nur bei Übereinstimmung der eingegebenen Antwort(en) mit der (den) jeweiligen zentral, beispielsweise in einem Intelligenten Netz (IN), gespeicherten Antwort(en) wird der Zugang zu dem betrefenden Dienst freigegeben.
Eine Authentisierungskarte zur Authentisierung von Dienste-Benutzern enthält vorzugsweise visuell ablesbar zumindest die dem zugehörigen Dienste-Benutzer zugeordnete Antwortmenge, zweckmäßigerweise aber auch die zugehörige Abfragemenge einer benutzerindividuell festgelegten, Abfragemenge und Antwortenmenge umfassenden Informationsmenge.

## Beschreibung

Im Rahmen des Sprach-Mehrwertdienst "Virtual Card Calling" (VCC), der es gestattet, Verbindungen von einem beliebigen Teilnehmeranschluß aus unter Buchung der Verbindungskosten auf das persönliche Konto des Benutzers, unabhängig von dem gerade benutzten Teilnehmeranschluß, aufzubauen und der z.B. durch ein sog. Intelligentes Netz (IN) ermöglicht wird (siehe z.B. telcom report 18(1995)3, 116 ... 119), läuft die Authentisierung des Telefon-Benutzers üblicherweise nach einem einfachen, ungeschützten Authentisierungsprotokoll (siehe CCITT X 509) ab:
- Vor einer Benutzung des VCC-Dienstes wird der Benutzer zunächst durch eine Ansage aufgefordert, seine Kartennummer (Benutzerkennzeichen) und ggf. eine zugehörige Persönliche Identifikationsnummer (PIN) einzugeben.
- Die Eingaben des Benutzers werden anschließend vom Intelligenten Netz (IN) verifiziert.
- Stimmen die eingegebenen Daten mit den im Intelligenten Netz (IN) gespeicherten Daten überein, wird der Zugang zum VCC-Dienst freigegeben.
- Stimmen die eingegebenen Daten mit den im Intelligenten Netz (IN) gespeicherten Daten nicht überein, wird eine vorgegebene Anzahl von Wiederholungen der Eingabe gestattet; Fehlversuche werden gezählt und führen nach Erreichung eines vordefinierten Schwellwertes (z.B. 3) zur automatischen Blockierung der Kartennummer.

Weitergehende Sicherheitsmechanismen sind in der Regel nicht vorgesehen, weil sie (wie z.B. eine Verschlüsselung) für den IN-Dienst Virtual Card Calling (VCC) als ungeeignet angesehen werden oder weil Probleme bei der Benutzerakzeptanz (z.B. der Akzeptanz einer systemüberwachten, sehr kurzen Lebensdauer der PIN) entstehen. Die Sicherheit der Authentisierung beruht somit im wesentlichen auf der Geheimhaltung der Kartennummer und/oder der Persönlichen Identifikationsnummer (PIN) durch den berechtigten Kartentelefonbenutzer.

In der Praxis sieht sich nun der Sprach-Mehrwertdienst "Virtual Card Calling" (VCC) mit dem Problem eines aktiven Ausspähens oder Abhörens von Authentisierungsinformationen bei der Benutzung des Dienstes konfrontiert. Wird Authentisierungsinformation z.B. durch Beobachtung des Benutzers bei der Eingabe ausgespäht oder durch sog. wiretapping z.B. bei der Eingabe während eines Hotelaufenthaltes abgehört, so wird der gebotene Schutz hinfällig. Anschließender Mißbrauch durch Dritte zu Lasten des Kuntos des berechtigten Benutzers ist meist unmittelbar möglich; es besteht die Gefahr einer kommerziellen Ausnutzung dieser Sicherheitslücke z.B. durch Verkauf der ermittelten Kartennummer und/oder PIN. Dem Problem des Abhörens von Authentisierungsinformationen könnte prinzipiell zwar durch eine verschlüsselte Übertragung von Kartennummer und/oder PIN begegnet werden; Verschlüsselungsmechanismen erfordern jedoch einen relativ hohen Hardware- und Softwareaufwand und sind für den VCC-Dienst kaum einsetzbar, weil vorhandene normale Telefone nutzbar sein sollen.

Die Erfindung zeigt nun einen Weg zu einer erhöhten Sicherheit bei der Authentisierung eines berechtigten Benutzers des Sprach-Mehrwertdienst "Virtual Card Calling" (VCC) durch ein additiv zum derzeit gängigen Authentisierungsverfahren hinzutretendes Verfahren.

Die Erfindung betrifft ein Verfahren zur Authentisierung von Dienste-Benutzern, insbesondere zur - ggf. zu einer Authentisierung von berechtigten Benutzern jeweils mittels Kartennummer und/oder Persönlicher Identifikationsnummer (PIN) hinzutretenden - Authentisierung von Benutzern eines Sprach-Mehrwertdienst "Virtual Card Calling" [VCC]; dieses Verfahren ist erfindungsgemäß dadurch gekennzeichnet, daß für jeden Dienste-Benutzer eine benutzerindividuell festgelegte Informationsmenge, bestehend aus einer Abfragemenge und einer Menge von zugehörigen Antworten, gespeichert wird, daß aus der Abfragemenge eine oder mehrere Abfrage(n) vorzugsweise zufallsgesteuert ausgewählt und dem Benutzer zu dessen Eingabe der jeweils zugehörigen Antwort übermittelt wird (werden) und daß nur bei Übereinstimmung der eingegebenen Antwort(en) mit der (den) jeweiligen zentral, insbesondere in einem Intelligenten Netz (IN), gespeicherten Antwort(en) der Zugang zu dem betreffenden Dienst freigegeben wird.
Bei zugelassenen Wiederholungen der Antwort(en)-Eingabe können in weiterer Ausgestaltung der Erfindung Fehlversuche gezählt und nach Erreichen eines vorgegebenen Schwellwertes die Kartennummer blockiert werden.

Eine Authentisierungskarte ist zur Authentisierung von Dienste-Benutzern, insbesondere zur - ggf. zu einer Authentisierung von berechtigten Benutzern jeweils mittels Kartennummer und/oder Persönlicher Identifikationsnummer (PIN) hinzutretenden - Authentisierung von Benutzern eines Sprach-Mehrwertdienst "Virtual Card Calling" [VCC] gemäß weiterer Erfindung dadurch gekennzeichnet, daß sie zumindest die dem zugehörigen Dienste-Benutzer zugeordnete Antwortmenge, zweckmäßigerweise aber auch die zugehörige Abfragemenge einer benutzerindividuell festgelegten, Abfragemenge und Antwortenmenge umfassenden Informationsmenge, vorzugsweise visuell ablesbar enthält.

Die Erfindung, die nicht darauf abzielt, die Ausspähung oder Abhörung an sich zu verhindern und die somit keine Verschlüsselung der Authentisierungsinformation erfordert, bringt den Vorteil mit sich, daß - ohne Verschlüsselung - durch eine einfache und kostengünstige zusätzliche Sicherungsmaßnahme die Nützlichkeit einer etwa ausgespähten oder abgehörten Authentisierungsinformation stark eingeschränkt wird, so daß ein weitreichender Mißbrauch nicht mehr möglich oder zumindest nicht mehr attraktiv ist.

Im folgenden wird die Erfindung im Rahmen der Authentisierung eines VCC-Benutzers noch näher erläutert.

In einem ersten Schritt möge, ohne daß dies hier näher erläutert werden muß, eine Authentisierung nach dem üblichen, eingangs umrissen Authentisierungsprotokoll mittels Kartennummer und/oder Persönlicher Identifikationsnummer (PIN) vonstatten gegangen sein. Hieran schließt sich nun als zweiter Authentisierungsschritt eine Abfrage benutzerbekannter Informationen, vorzugsweise zufallsgesteuert, an:

Mit der Installation eines VCC-Benutzers wird zentral, insbesondere in einem Intelligenten Netz (IN), ein benutzerindividuelles Informationsmuster abgespeichert, das aus einer damit benutzerindividuell vorgegebenen Menge von Abfrageelementen wie Zahlen, Buchstaben, Begriffen usw. und einer entsprechenden Menge von benutzerindividuell zugeordneten Antwortelementen (Zahlen, Buchstaben, Begriffe usw.) besteht und das beliebig festgelegt sein kann.
Eine dem VCC-Benutzer zur Verfügung gestellte Authentisierungskarte enthält das gleiche benutzerindividuelle Informationsmuster als Kartenaufdruck.

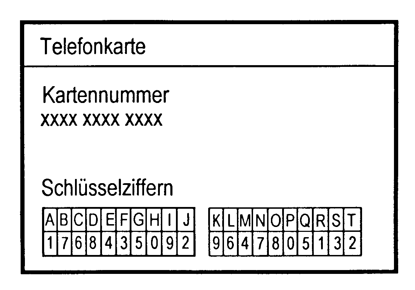

Ein Ausführungsbeispiel einer solchen Authentisierungskarte ist in der Zeichnung dargestellt. In diesem Beispiel enthält die Telefon-Authentisierungskarte visuell ablesbar zwei Abfragemengen, nämlich die Abfragemenge {A,B,C,D,E,F,G,H,I,J} und die Abfragemenge {K,L,M,N,O,P,Q,R,S,T}, sowie eine Antwortmenge {1,2,3,4,5,6,7,8,9,0}, deren Elemente (Schlüsselziffern) in unterschiedlicher Kombination den Elementen der beiden Abfragemengen zugeordnet sind.

Im zweiten Authentisierungsschritt wird (werden) nun zentral, beispielsweise in einem Intelligenten Netz (IN), aus der Menge der für den betreffenden VCC-Benutzer vorgegebenen Abfrageelemente, vorzugsweise zufallsgesteuert, ein (oder mehrere) Abfrageelement(e) ausgewählt und dem VCC-Benutzer übermittelt. Durch eine entsprechende Ansage oder auch Anzeige wird der VCC-Benutzer aufgefordert, zu diesem (diesen) zufallsgesteuert ausgewählten Abfrageelement(en) das (die) zugeordneten Antwortelement(e) einzugeben. Diese Aufforderung kann beispielsweise zur "Eingabe der Schlüsselziffern 'A' und 'O' Ihrer Karte" auffordern.

Der VCC-Benutzer ermittelt daraufhin die geforderten Antwortelemente aus dem auf seiner Authentisierungskarte befindlichen Informationsmuster und macht die entsprechenden Eingaben; im betrachteten Beispiel kommt es also zur Eingabe der Daten '1' und '8', d.h. zur Eingabe von '18'.

Stimmen die eingegebenen Daten mit den zentral (im Intelligenten Netz (IN)) gespeicherten Daten überein, ist der zweite Schritt der Authentisierung erfolgreich durchgeführt worden, und der Zugang zum VCC-Dienst ist frei.

Stimmen die eingegebenen Daten mit den zentral (im Intelligenten Netz (IN) gespeicherten Daten nicht überein, wird die Authentisierungsprozedur abgebrochen. Fehlversuche werden gezählt und führen nach Erreichung eines vorgegebenen Schwellwertes zur automatischen Blockierung der Kartennummer. Keine Eingabe gilt auch als Fehlversuch.

Ein Mißbrauch ausgespähter oder abgehörter Authentisierungsinformationen wird so mit einfachen Mitteln erheblich erschwert, weil bei jedem Anruf eine andere Information abgefragt wird. Zur Rekonstruktion der Karteninformation wäre daher ein sehr häufiges Ausspähen bzw. Abhören des einzelnen Benutzers erforderlich, wobei zudem das Ausspähen bzw. Abhören der Benutzereingaben für sich allein nicht einmal ausreicht; vielmehr müsste auch die vom Intelligenten Netz (IN) gesendete zugehörige Abfrageinformation abgehört werden, um die Relation zwischen Abfrage und Antwort herstellen zu können. Eine mögliche kommerzielle Vermarktung ausgespähter oder abgehörter Authentisierungsinformationen erscheint deshalb als wenig attraktiv.

Die Wahrscheinlichkeit einer zufällig richtigen Antwort eines unberechtigten Benutzers kann durch hinreichende Grösse der Menge der Abfrageelemente, durch Vorgabe mehrerer Mengen von Abfrageelementen, Strukturierung des Informationsmusters entsprechend klein gehalten werden. So hat z.B. bei Abfrage einer zweistelligen Zahl eine zufällig richtige Eingabe die Wahrscheinlichkeit 10⁻²; bei einer vierstelligen Zahl ist die Wahrscheinlichkeit 10⁻⁴. Ein "Durchprobieren" kann - entsprechend der Vorgehensweise bei herkömmlicher Authentisierung - durch ein Blockieren nach z.B. 3 Fehleingaben verhindert werden.
Bei Aneignung einer fremden Karte besteht weiterhin Schutz durch Nichtabdruck der Persönliche Identifikationsnummer (PIN) bzw. durch einen nur unvollständigen Abdruck der Kartennummer.

Die Erfindung ist auch insofern flexibel einsetzbar, als sich Ihr Einsatz als gezielte Maßnahme gegen Ausspähen oder Abhören von Benutzereingaben bei der Authentisierung additiv zur üblichen Authentisierungsprozedur auch auf VCC-Benutzer mit erhöhtem Sicherheitsbedarf beschränken kann.

Die Erfindung kann in entsprechender Weise auch in anderen Fällen Anwendung werden, in denen die Gefahr von Mißbrauch durch das Beobachten von Benutzereingaben oder das elektrische Mitlesen übertragener Informationen bei Authentisierungsvorgängen besteht. Weitere Anwendungsbeispiele bei Kommunikationsdiensten sind etwa Authentisierungsvorgänge bei Mobility Services wie Universal Personal Telecommunication (UPT), bei einem Remote Access zu Virtual Private Networks (VPN) oder beim Zugang zu Voice Mail.

## Patentansprüche

1. Verfahren zur Authentisierung von Dienste-Benutzern, insbesondere zur - ggf. zu einer Authentisierung von berechtigten Benutzern jeweils mittels Kartennummer und/oder Persönlicher Identifikationsnummer (PIN) hinzutretenden - Authentisierung von Benutzern eines Sprach-Mehrwertdienst "Virtual Card Calling" [VCC],
**dadurch gekennzeichnet**,
daß für jeden Dienste-Benutzer eine benutzerindividuell festgelegte Informationsmenge, bestehend aus einer Abfragemenge und einer Menge von zugehörigen Antworten, gespeichert wird, daß aus der Abfragemenge eine oder mehrere Abfrage(n) ausgewählt und dem Benutzer zu dessen Eingabe der jeweils zugehörigen Antwort übermittelt wird (werden)
und daß nur bei Übereinstimmung der eingegebenen Antwort(en) mit der (den) jeweiligen zentral gespeicherten Antwort(en) der Zugang zu dem betreffenden Dienst freigegeben wird.

2. Verfahren nach Anspruch 1,
**dadurch gekennzeichnet**,
daß die Abfrage(n) aus der jeweiligen Abfragemenge zufallsgesteuert ausgewählt wird (werden)

3. Verfahren nach Anspruch 1 oder 2,
**dadurch gekennzeichnet**,
daß bei Wiederholungen der Antwort(en)-Eingabe Fehlversuche gezählt werden und nach Erreichen eines vorgegebenen Schwellwertes die Kartennummer blockiert wird.

4. Authentisierungskarte zur Authentisierung von Dienste-Benutzern, insbesondere zur - ggf. zu einer Authentisierung von berechtigten Benutzern jeweils mittels Kartennummer und/oder Persönlicher Identifikationsnummer (PIN) hinzutretenden - Authentisierung von Benutzern eines Sprach-Mehrwertdienst "Virtual Card Calling" [VCC],
**dadurch gekennzeichnet**,
daß sie die dem zugehörigen Dienste-Benutzer zugeordnete Antwortmenge einer benutzerindividuell festgelegten Informationsmenge, bestehend aus einer Abfragemenge und einer Menge von zugehörigen Antworten, visuell ablesbar enthält.

5. Authentisierungskarte nach Anspruch 4,
**dadurch gekennzeichnet**,
daß sie die dem zugehörigen Dienste-Benutzer zugeordnete, benutzerindividuell festgelegte Informationsmenge, bestehend aus einer Abfragemenge und einer Menge von zugehörigen Antworten, visuell ablesbar enthält.
